# EUROPEAN PATENT APPLICATION

(11) **EP 3 210 692 A1**
(43) Date of publication of application: **30.08.2017**
(21) Application number: 17157928.7
(22) Date of filing: 24.02.2017
(51) Int. Cl.: B22C 7/02, B22C 9/04

(54) **CASTING WITH METAL COMPONENTS AND METAL SKIN LAYERS**

(30) Priority: 29.02.2016 US 201615056545
(71) Applicant: General Electric Company, Schenectady, NY 12345 (US)
(72) Inventor: BUNKER, Ronald Scott, West Chester, OH 45069 (US); KONITZER, Douglas Gerard, Cincinnati, OH 45215 (US)
(74) Representative: Pöpper, Evamaria

(57) **Abstract**

The present disclosure generally relates to casting molds including a casting core (200) comprising an outer shell mold (208) surrounding at least a portion of a casting core (200) and a casting core (200) comprising a second metal skin layer (204) around a first metal component (202). In one aspect, at least one portion of the first metal component (202) may be exposed on a surface of the outer shell mold (208). In another aspect, the outer shell mold (208) may be configured to define a cavity in the casting core (200) when the first metal component (202) is removed and the second metal skin layer (204) is not removed.

## Description

### INTRODUCTION

The present disclosure generally relates to casting core components and processes utilizing these core components. The core components of the present invention may include a metal skin layer surrounding a first metal component that has a melting point that is lower than the metal skin layer. The metal skin layer(s) and the metal component(s) provide useful properties in casting operations, such as in the casting of superalloys used to make turbine blades, near wall chamber of a turbine blade, or a cooling chamber of a turbine blade for jet aircraft engines or power generation turbine components.

### BACKGROUND

Many modern engines and next generation turbine engines require components and parts having intricate and complex geometries, which require new types of materials and manufacturing techniques. Conventional techniques for manufacturing engine parts and components involve the laborious process of investment or lost-wax casting. One example of investment casting involves the manufacture of a typical rotor blade used in a gas turbine engine. A turbine blade typically includes hollow airfoils that have radial channels extending along the span of a blade having at least one or more inlets for receiving pressurized cooling air during operation in the engine. Among the various cooling passages in the blades, includes serpentine channel disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

The manufacture of these turbine blades, typically from high strength, superalloy metal materials, involves numerous steps. First, a precision ceramic core is manufactured to conform to the intricate cooling passages desired inside the turbine blade. A precision die or mold is also created which defines the precise 3-D external surface of the turbine blade including its airfoil, platform, and integral dovetail. The ceramic core is assembled inside two die halves which form a space or void therebetween that defines the resulting metal portions of the blade. Wax is injected into the assembled dies to fill the void and surround the ceramic core encapsulated therein. The two die halves are split apart and removed from the molded wax. The molded wax has the precise configuration of the desired blade and is then coated with a ceramic material to form a surrounding ceramic shell. Then, the wax is melted and removed from the shell leaving a corresponding void or space between the ceramic shell and the internal ceramic core. Molten superalloy metal is then poured into the shell to fill the void therein and again encapsulate the ceramic core contained in the shell. The molten metal is cooled and solidifies, and then the external shell and internal core are suitably removed leaving behind the desired metallic turbine blade in which the internal cooling passages are found.

The cast turbine blade may then undergo additional post casting modifications, such as but not limited to drilling of suitable rows of film cooling holes through the sidewalls of the airfoil as desired for providing outlets for the internally channeled cooling air which then forms a protective cooling air film or blanket over the external surface of the airfoil during operation in the gas turbine engine. However, these post casting modifications are limited and given the ever increasing complexity of turbine engines and the recognized efficiencies of certain cooling circuits inside turbine blades, the requirements for more complicated and intricate internal geometries is required. While investment casting is capable of manufacturing these parts, positional precision and intricate internal geometries become more complex to manufacture using these conventional manufacturing processes. Accordingly, it is desired to provide an improved casting method for three dimensional components having intricate internal voids.

Precision metal casting using hybrid core components utilizing a combination of refractory metal and ceramic casting components is known in the art. Hybrid cores have been made that include portions of refractory metal and ceramic material. For example, *See* U.S. 2013/0266816 entitled "Additive manufacturing of hybrid core." The techniques used to manufacture hybrid cores disclosed in this application utilized conventional powder bed technology. Although hybrid cores offer additional flexibility for casting of superalloys for example in the casting of turbine blades used in jet aircraft engines, there remains a need for more advanced investment casting core technology.

### SUMMARY

The present invention relates to a novel casting mold comprising a casting core including an outer shell mold surrounding at least a portion of a casting core comprising a refractory metal skin around a first metal component. In one aspect, at least one portion of the first metal component may be exposed on a surface of the outer shell mold. In another aspect, the outer shell mold may be configured to define a cavity in the casting core when the first metal component is removed and the second metal skin layer is not removed.

In one embodiment the first metal component (e.g., non-refractory metal component) may include aluminum, copper, silver, and/or gold and the second metal skin layer may include molybdenum, niobium, tantalum and/or tungsten. The first metal component and/or the second metal skin layer may include an alloy.

One or more of the first metal component and/or the second metal skin layer may be adapted to define within a cast component cooling holes, trailing edge cooling channels, or micro channels among other structures. The first metal component and/or the second metal skin layer may also be adapted to provide a core support structure, a platform core structure, or a tip flag structure. Several metal components of first metal component and/or second metal skin layer may be used in a single casting core, or may be used either alone or with other casting components in a ceramic casting core assembly.

The present invention also relates to methods of making a cast component comprising forming an outer shell mold around a casting core, the casting core comprising a second metal skin layer around a first metal component, wherein at least one portion of the first metal component is exposed on a surface of the outer shell mold, melting the first metal component and removing the melted first metal component from the ceramic shell to form a cavity within the second metal skin layer, adding a third metal to the cavity of second metal skin layer to form a cast component, and removing the outer shell mold and second metal skin layer from the cast component.

In another aspect, the entire casting core including the first metal component and the second metal skin layer may be made by a direct last melting/sintering from a powder bed. Alternatively, the first metal component and the refractory metal component may be assembled within a mold and a ceramic slurry may be introduced to create the casting core.

In another aspect, the second metal skin layer may be formed around a first metal component by: (a) adhering a refractory metal powder to a surface of the first metal component, (b) removing a first excess of the refractory metal power, (c) fusing the refractory metal powder, and (d) removing a second excess of refractory metal powder.

### BRIEF DESCRIPTION OF THE DRAWINGS

FIG. 1 is a flowchart of an additive manufacturing process.
FIG. 2 illustrates a method of forming a cast component in accordance with an embodiment of the present invention.
FIG. 3 illustrates a method of forming a cast component in accordance with an embodiment of the present invention.
FIG. 4 illustrates a method of forming a cast component in accordance with an embodiment of the present invention.
FIG. 5 illustrates a method of forming a cast component in accordance with an embodiment of the present invention.
FIG. 6 illustrates a method of forming a cast component in accordance with an embodiment of the present invention.
FIG. 7 illustrates a method of forming a cast component in accordance with an embodiment of the present invention.
FIG. 8 illustrates a method of forming a cast component in accordance with an embodiment of the present invention.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details.

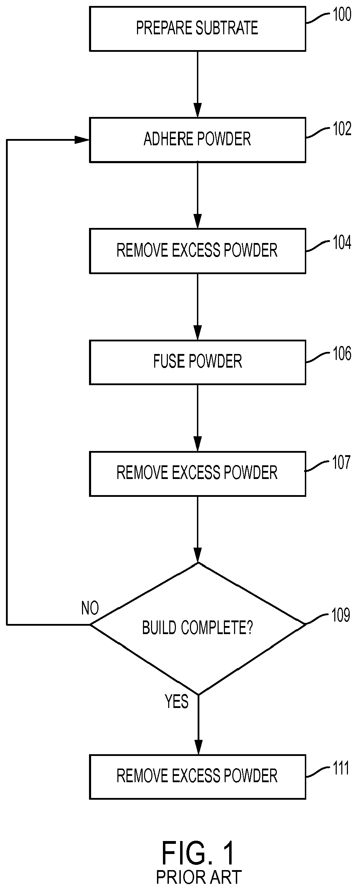

Referring to the drawings wherein identical reference numerals denote the same elements throughout the various views, FIG. 1 is a flowchart showing the steps in an additive manufacturing process for building a metal skin layer over part of a surface. *See* US 2016/0332251 A1 entitled "ADDITIVE MANUFACTURING ON 3-D COMPONENTS," the disclosure of which is incorporated herein by reference.

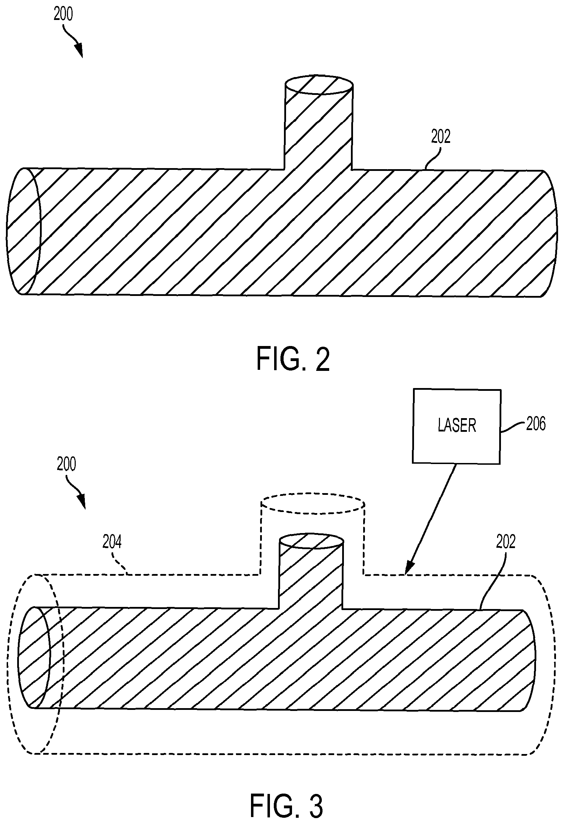

The process begins with an existing part surface (e.g., the first metal component 202 discussed *infra* with respect in FIG. 2). The term "part" refers both to an otherwise-complete component as well as a part in an uncompleted state, such as a rough casting, blank, preform, or part manufactured by an additive manufacturing process. The surface is appropriately prepared (block 100) as required to accept bonding of a powdered material thereto. For example, contaminants may be removed and/or the surface roughened by solvents, fluoride ion cleaning, grit blasting, etc.

Next, a powder is adhered to the surface, block 102. The powder may be any suitable material for additive manufacturing. For example, the powder may be of metallic, polymeric, organic, or ceramic composition.

As used herein, the term "adhere" refers to any method that causes a layer to adhere to the surface with sufficient bond strength so as to remain in place during a subsequent powder fusion process. "Adhering" implies that the powder has a bond or connection beyond simply resting in place under its own weight, as would be the case with a conventional powder-bed machine. For example, the surface may be coated with an adhesive product, which may be applied by methods such as dipping or spraying. One non-limiting example of a suitable low-cost adhesive is Repositionable 75 Spray Adhesive available from 3M Company, St. Paul, MN 55144 US. Alternatively, powder could be adhered by other methods such as electrostatic attraction to the part surface, or by magnetizing the powder (if the part is ferrous). As used herein, the term "layer" refers to an incremental addition of mass and does not require that the layer be planar, or cover a specific area or have a specific thickness.

The powder may be applied by dropping or spraying the powder over the surface, or by dipping the part in powder. Powder application may optionally be followed by brushing, scraping, blowing, or shaking as required to remove excess powder (block 104), for example to obtain a uniform layer. It is noted that the powder application process does not require a conventional powder bed or planar work surface, and the part may be supported by any desired means, such as a simple worktable, clamp, or fixture.

Once the powder is adhered, a directed energy source (such as a laser or electron beam) is used to melt a layer of the structure being built, block 106. The directed energy source emits a beam and a beam steering apparatus is used to steer the beam over the exposed powder surface in an appropriate pattern. The exposed layer of the powder is heated by the beam to a temperature allowing it to melt, sinter, flow, and consolidate. This step may be referred to as fusing the powder.

The fusing step may be followed by removing any un-fused powder (e.g. by brushing, scraping, blowing, or shaking) as required, block 107. This step is optional, meaning it may or may not be required or desired for a particular application.

This cycle of adhering powder, removing excess powder, and then directed energy melting or sintering the powder is repeated until the entire component is complete (block 109).

The general process described above may be used to form any type of additive structure desired. The process is particularly useful for forming cooling structures on gas turbine engine hot section components.

The core component of the present disclosure may be used to provide a cooling feature in the final product such as cooling holes, trailing edge cooling channels, micro channels, crossover holes that connect two cooling cavities, internal impingement holes in double walled or near-wall cooling structures, refresher holes in the root turns of blades, as well as additional cooling features known in the art. In addition, the graded core component may be used to match the thermal expansion characteristics of two or more materials. The core component of the present disclosure may also be used to add or dope certain regions of a cast metal object with a desired element or alloy.

The additive manufacturing techniques described above enable formation of almost any desired shape and composition of a core component. The core component of the present disclosure may optionally be assembled with other refractory metal pieces or other metal (non-refractory) or ceramic components. In one embodiment, the core component and any other optional components may be utilized within a core portion of a ceramic mold, such as used in the manufacture of superalloy turbine blades for jet aircraft engines. A mold may then be prepared and molten superalloy poured into the cavity of the mold including contact with a refractory metal component. The mold component may be removed from the mold using a combination mechanical and chemical processes, together with or followed by removal of the refractory component from the formed superalloy component using thermal (e.g., melting) or chemical processes (e.g., etching).

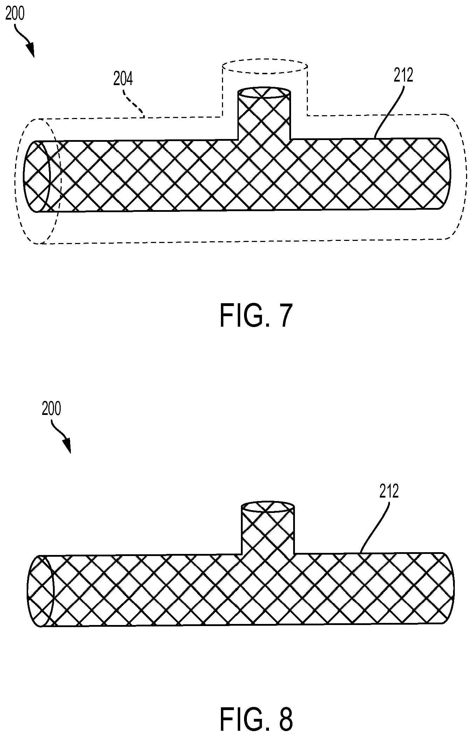

FIGs. 2-8 illustrate a method 200 of making a cast component 212 in accordance with certain aspects of the present disclosure. In one aspect, the method 200 illustrated in FIGs. 2-8 may be used to cast a jet aircraft component such as a single-crystal superalloy turbine blade. For example, referring to FIG. 2, a first metal component 202 may be used as the starting point for making the end cast component 212 seen in FIG. 8. The first metal component 202 may include a low melting point metal and/or alloy including, but not limited to, at least one of aluminum, nickel, copper, gold, and/or silver or combinations or alloys thereof. In addition, the first metal component 202 may include a metal that is not a refractory metal.

Referring to FIG. 3, a second metal skin layer 204 may be formed surrounding the first metal component 202. In an aspect, the second metal skin layer 204 may be formed using the additive manufacturing techniques described *supra* with respect to FIG. 1. For example, the first metal portion 202 may be prepared as required to accept bonding of a refractory metal powder thereto. The preparation of the surface of the first metal component 202 may include removing contaminants and/or roughening the surface using solvents, fluoride ion cleaning, grit blasting, etc.

Next, according to an example embodiment, a refractory metal powder may be adhered to the surface of the first metal component 202. The refractory metal powder may include, but is not limited to, at least one of molybdenum, niobium, tantalum and/or tungsten or combinations or alloys thereof. In one aspect, the materials of the second metal skin layer 204 may be optionally chosen to locally alter the composition of the cast component 212 by diffusing one or more elements or alloys into the material of the cast component 212. Some refractory metals may oxidize or dissolve in molten/liquid superalloys. In addition, the second metal skin layer 204 may include a material that forms a surface protective film upon heating may be used. For example, MoSi₂, respectively forms a protective layer of SiO₂.

Still referring to FIG. 3, the refractory metal powder may be applied by dropping or spraying the refractory metal powder over the surface of the first metal component 202, or by dipping the first metal component 202 in the refractory metal powder. Powder application of the refractory metal may optionally be followed by brushing, scraping, blowing, or shaking as required to remove excess refractory metal powder from the first metal component 202, for example, to obtain a uniform layer.

Once the refractory metal powder is adhered to the first metal component 202, a directed energy source 206 (such as a laser or electron beam) may be used to melt/sinter a layer of refractory metal to form a second metal skin layer 204 over the surface of the first metal component 202. The directed energy 206 source emits a beam and a beam steering apparatus is used to steer the beam over the exposed powder surface in an appropriate pattern. The exposed layer of the refractory metal powder is heated by the beam to a temperature allowing it to melt, sinter, flow, and/or consolidate. This step may be referred to as fusing the refractory metal powder into the second metal skin layer 204. The layer of skin 204 over the first metal component 202 may also be provided in a pattern or intermittent layer (not shown). For example, the second metal skin layer 204 may include two or more holes that permit access to the underlying metal through subsequent processes. The access holes may then be used to remove metal from within the skin layer, and possibly to add a cast metal in a subsequent step. Additionally, the second metal skin layer 204 may be formed with either a uniform thickness or a nonuniform thickness depending on the desired shape of the final product.

Alternatively, the skin layer 204 may be formed using the additive manufacturing technique disclosed in U.S. 2013/0266816 entitled "Additive manufacturing of hybrid core," the disclosure of which is incorporated herein in its entirety.

The example embodiments discussed *supra* referring to specific metals are not intended to be limiting. For example, the first metal component 202 may include any metal that has a lower melting point than the metal used for the second metal skin layer 204. Similarly, the second metal skin layer 204 may include any metal that has a higher melting point than the metal used for the first metal component 202.

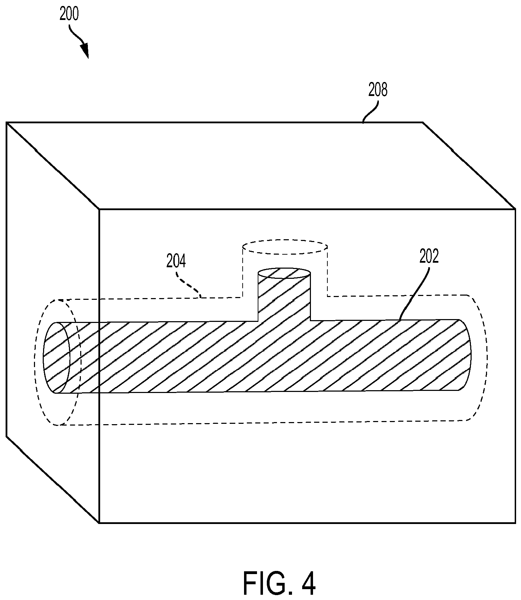

Referring to FIG. 4, an outer shell component 208 may be formed around first metal component 202 and the second metal skin layer 204. The outer shell mold 208 may include a ceramic. Alternatively, the outer shell component 208 may be formed around the first metal component 202 and the first metal component 202 may be removed, thereby forming a cavity in the outer shell component. In this alternative example, the second metal skin layer 204 may be formed on a surface of the cavity in the outer shell component 208.

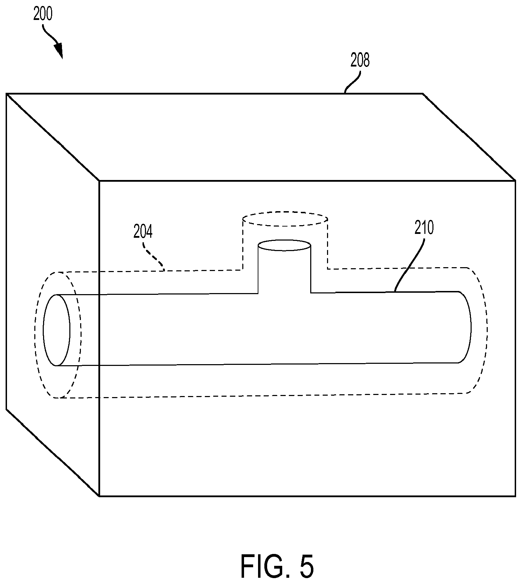

As illustrated in FIG. 5, the first metal component 202 may be removed from the second metal skin layer 204 and the outer shell component 208 to form cavity 210. In one aspect, the first metal component 202 may be removed from the casting mold 400 by melting the first metal component 202. In an example embodiment, the first metal component 202 may be chosen such that its melting point is lower than the melting point of the second metal skin layer 204. In this way, the first metal component 202 may be melted without melting and/or causing damage to the refractory metal 204.

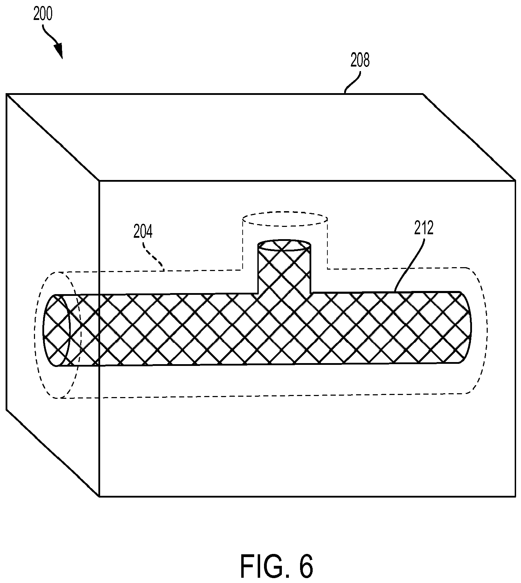

As illustrated in FIG. 6, a liquid metal may be poured into the cavity 210 and solidified to form cast component 212. The liquid metal may be a liquid superalloy. For example, the liquid metal may include a nickel based alloy including inconel, among others.

After solidifying the liquid metal to form the cast component 212, the outer shell mold 208 may be removed to expose the second metal skin layer 204 and the cast component 212, as illustrated in FIG. 7. The outer shell mold 208 may be removed by mechanical means such as breaking.

Referring to FIG. 8, the second metal skin layer 204 may be removed exposing the casting component 212. The removal of the second metal skin layer 204 may be removed by chemical means (e.g., etching) involving immersion in an acid treatment. To the extent the second metal skin layer is part of a ceramic core component caustic solution under elevated temperature and/or pressure may be used to leach the ceramic material away either before or after removing the second metal skin layer. The second metal skin layer may be removed using a chemical means that does not remove or cause damage to the cast component 212. In one aspect, the second metal skin layer is formed by sintering rather than melting to complete fusion. This may increase the number of options for removing the second metal skin layer. For example, in some cases the sintered (incompletely fused) metal may be removed using physical means (e.g., shaking). In addition, sintered material may be more readily removed using an acid etch where the etch solution more rapidly penetrates the sintered powder structure. Alternatively, the step illustrated in FIG. 8 may be omitted and the second metal skin layer 204 may remain on the casting component 212.

The first metal component 202 and the second metal skin layer 204 may be removed during and/or after forming a superalloy cast component. The first metal component 202 may be chosen such that it has a lower melting point than the second metal skin layer 204. In this way, the first metal component 202 may be melted and removed without melting and/or causing damage to the second metal skin layer 204. Thereafter, the melted superalloy may be poured into a cavity formed by removing the first metal component 202 and by leaving the second metal skin layer 204. The removal of the second metal skin layer 204 may be performed after solidifying the melted superalloy to produce the cast component (e.g., turbine blade). For example, the second metal skin layer 204 may be removed using chemical means including, but not limited to, etching using an acid treatment. The etching to remove the second metal skin layer 204 may be performed before or after immersion in a caustic solution under elevated temperature and pressure to remove any ceramics. In one aspect, the second metal skin layer 204 may be sintered rather than melted. This may increase the number of options for removing the second metal skin layer 204. For example, in some cases the sintered (incompletely fused) second metal may be removed using physical means (e.g., shaking). In addition, sintered material may be more readily removed using an acid etch where the etch solution more rapidly penetrates the sintered powder structure.

In the above example, the first metal component 202 is used as a disposable pattern material, analogous to wax in the lost wax process for forming a turbine blade. In addition, the first metal component 202 may be used in conjunction with the second metal skin layer 204 within a lost-wax process. In this case, both metals form a portion of the casting core. The casting core is then surrounded in wax and then a ceramic shell. The wax is removed and in addition, the first metal component 202 is melted away in the same or different heating step that is used to remove the wax. The first metal component 202 can be used as a gate material in the casting process that provides a passage for subsequently molded material after being melted away. Alternatively, the first metal component 202 may be used in conjunction with the second metal skin layer 204 within a portion of a shell mold in an investment casting process.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. Aspects from the various embodiments described, as well as other known equivalents for each such aspect, can be mixed and matched by one of ordinary skill in the art to construct additional embodiments and techniques in accordance with principles of this application.

Various aspects and embodiments of the present invention are defined by the following clauses:
1. A casting mold comprising:
   a casting core comprising a first metal component and a second metal skin layer surrounding at least a portion of the first metal component, the second metal skin layer having a higher melting point than the first metal,
      wherein the first metal component is configured such that upon removal a cavity is formed that may be filled with a third metal.
2. The casting mold of clause 1, wherein the second metal skin layer comprises a refractory metal.
3. The casting mold of clause 1, wherein the second metal skin layer has a thickness that does not exceed 2 millimeters.
4. The casting mold of clause 1, wherein the first metal component includes at least one of aluminum, aluminum alloy, nickel, nickel alloy, copper, copper alloy, gold, gold alloy, silver, or silver alloy.
5. The casting mold of clause 3, wherein the second metal skin layer comprises tungsten or a tungsten alloy.
6. The casting mold of clause 3, wherein the second metal skin layer comprises molybdenum or a molybdenum alloy.
7. The casting mold of clause 1, wherein the second metal skin layer includes two or more openings that allow access to the first metal component.
8. The casting mold of clause 1, further comprising:
   an outer shell mold surrounding at least a portion of one or more of the first metal component or the second metal skin layer,
   wherein the outer shell mold comprises ceramic.
9. A method of making a cast component comprising:
   a casting core including a first metal component and a second metal skin layer surrounding at least a portion of the first metal component, the second metal skin layer having a higher melting point than the first metal;
   removing the first metal component to form a cavity within at least a portion of the second metal skin layer; and
   adding a third metal to fill at least a portion of the cavity within second metal skin layer
10. The method of clause 9, further comprising removing second metal skin layer from the cast component.
11. The method of clause 9, wherein the second metal skin layer is 3-dimensional.
12. The method of clause 9, wherein the first metal component includes a metal with a lower melting point than the second metal skin layer.
13. The method of clause 11, wherein the first metal component includes at least one of aluminum, aluminum alloy, nickel, nickel alloy, copper, copper alloy, gold, gold alloy, silver, or silver alloy.
14. The method of clause 12, wherein the second metal skin layer includes tungsten or a tungsten alloy.
15. The method of clause 12, wherein the second metal skin layer includes molybdenum or a molybdenum alloy.
16. The method of clause 9, further comprising:
   forming an outer shell mold around the casting core; and
   removing the outer shell mold after the casting core is formed,
      where the outer shell mold comprises ceramic.
17. The method of clause 9, wherein the removing the second metal skin layer comprises at least one of leaching or etching.
18. The method of clause 9, wherein the removing the first metal component comprises melting.
19. The method of clause 9, wherein the second metal skin layer is formed around a first metal component by:
   (a) adhering a second metal powder to a surface of the first metal component;
   (b) removing a first excess of the second metal power;
   (c) fusing the second metal powder; and
   (d) removing a second excess of second metal powder.
20. The method of clause 19, wherein the second metal powder is adhered to the surface of the first metal component by submerging at least a portion of the first metal component into the second metal powder.

## Claims

1. A casting mold comprising:
a casting core (200) comprising a first metal component (202) and a second metal skin layer (204) surrounding at least a portion of the first metal component (202), the second metal skin layer (204) having a higher melting point than the first metal,
wherein the first metal component (202) is configured such that upon removal a cavity (210) is formed that may be filled with a third metal (212).

2. The casting mold of claim 1, wherein the second metal skin layer (204) comprises a refractory metal.

3. The casting mold of any one of claims 1 or 2, wherein the second metal skin layer (204) has a thickness that does not exceed 2 millimeters.

4. The casting mold of any one of claims 1 to 3, wherein the first metal component (202) includes at least one of aluminum, aluminum alloy, nickel, nickel alloy, copper, copper alloy, gold, gold alloy, silver, or silver alloy.

5. The casting mold of any one of claims 1 to 4, wherein the second metal skin layer (204) includes two or more openings that allow access to the first metal component (202).

6. The casting mold of any one of claims 1 to 5, further comprising:
an outer shell mold (208) surrounding at least a portion of one or more of the first metal component (202) or the second metal skin layer (204),
wherein the outer shell mold (208) comprises ceramic.

7. A method of making a cast component comprising:
a casting core (200) including a first metal component (202) and a second metal skin layer (204) surrounding at least a portion of the first metal component (202), the second metal skin layer (204) having a higher melting point than the first metal (202);
(a) removing the first metal component (202) to form a cavity (210) within at least a portion of the second metal skin layer (204); and
(b) adding a third metal (212) to fill at least a portion of the cavity (210) within second metal skin layer (204)

8. The method of claim 7, further comprising removing second metal skin layer (204) from the cast component.

9. The method of any one of claims 7 or 8, wherein the second metal skin layer (204) is 3-dimensional.

10. The method of any one of claims 7 to 9, wherein the first metal component (202) includes a metal with a lower melting point than the second metal skin layer (204).

11. The method of any one of claims 7 to 10, wherein the first metal component (202) includes at least one of aluminum, aluminum alloy, nickel, nickel alloy, copper, copper alloy, gold, gold alloy, silver, or silver alloy.

12. The method of any one of claims 7 to 11, wherein the second metal skin layer (204) includes, tungsten, a tungsten alloy, molybdenum, or a molybdenum alloy.

13. The method of any one of claims 7 to 12, further comprising:
(c) forming an outer shell mold (208) around the casting core (200); and
(d) removing the outer shell mold (208) after the casting core (200) is formed,
where the outer shell mold (208) comprises ceramic.

14. The method of any one of claims 7 to 13, wherein the removing the second metal skin layer (204) comprises at least one of leaching or etching, and wherein the removing the first metal component (202) comprises melting.

15. The method of any one of claims 7 to 14, wherein the second metal skin layer (204) is formed around a first metal component (202) by:
(e) adhering a second metal powder to a surface of the first metal component (202);
(f) removing a first excess of the second metal power;
g) fusing the second metal powder; and
(h) removing a second excess of second metal powder,
wherein the second metal powder is adhered to the surface of the first metal component (202) by submerging at least a portion of the first metal component (202) into the second metal powder.
